# EUROPÄISCHE PATENTSCHRIFT

(11) **EP 1 064 509 B1**
(45) Veröffentlichungstag und Bekanntmachung des Hinweises auf die Patenterteilung: **15.05.2002**
(21) Anmeldenummer: 99907596.3
(22) Anmeldetag: 04.03.1999
(51) Int. Cl.: F25J 1/02

(54) **VERFAHREN UND VORRICHTUNG ZUR HERSTELLUNG VON MATSCH AUS VERFLÜSSIGTEM GAS**
METHOD AND DEVICE FOR PRODUCING SLUSH FROM LIQUEFIED GAS
PROCEDE ET DISPOSITIF POUR LA PRODUCTION DE BOUE A PARTIR DE GAZ LIQUEFIE

(30) Priorität: 16.03.1998 DE 19811315
(43) Veröffentlichungstag der Anmeldung: 03.01.2001
(73) Patentinhaber: MI Developments Austria AG & Co KG, 8041 Graz-Thondorf (AT)
(72) Erfinder: BRUNNHOFER, Klaus, A-8010 Graz (AT)
(74) Vertreter: Kovac, Werner, Dipl.-Ing.
(86) Internationale Anmeldenummer: EP9901418
(87) Internationale Veröffentlichungsnummer: WO9947872

(56) Entgegenhaltungen:
- EP-A- 0 641 981
- FR-A- 2 271 526
- GB-A- 2 253 472
- US-A- 4 488 407

## Beschreibung

Die gegenständliche Erfindung betrifft ein Verfahren zur Herstellung von Matsch aus verflüssigtem Gas, welches durch Zerstäubung in ein Kryostatbehältnis eingebracht wird, wobei feste Kristalle entstehen, die sich im Kryostatbehältnis mit vorhandenem verflüssigten Gas zu Matsch vermengen bzw. vermengt werden. Die Erfindung betrifft ferner eine Vorrichtung zur Herstellung von Matsch aus verflüssigtem Gas.

Wasserstoff (H₂) eignet sich Dank seines geringen Molekulargewichtes und seiner hohen Verbrennungswärme für hochenergetische Raketentreibstoff - Kombinationen als Brennstoff. Flüssiger Wasserstoff (LH₂) gehört zu den kryogenen Treibstoffen und benötigt bei der Anwendung in einer Antriebseinheit eine entsprechende Wärmeisolation der Tanks. Beim Umgang mit Wasserstoff müssen besondere Sicherheitsvorkehrungen getroffen werden. Die Entzündungsgefahr ist für Wasserstoff wegen seiner hohen Diffusionsgeschwindigkeit größer als bei anderen Brennstoffen. Schon kleine Funken (z.B. durch statische Aufladung) genügen, um einen Brand oder eine Explosion auszulösen.

Durch die Forderung nach einer möglichst gewichts- und raumsparenden Bauweise von Raumtransportsystemen wurden für die Speicherung des Antriebsgases Wasserstoff die Verflüssigung des Gases sowie eine weitere Verdichtung des flüssigen Wasserstoffes bei tiefen Temperaturen in Betracht gezogen und es wurde schließlich vorgeschlagen, Matsch - mit flüssigem Wasserstoff vermischte Wasserstoffkristalle mit einem Kristallgehalt von 40 - 60 Gewichtsprozent - einzusetzen. Matsch vereinigt eine Reihe von günstigen Eigenschaften, wie hohe Dichte, hohen Kälteinhalt und gutes Fließverhalten. Aufgrund dieser Eigenschaften eignet sich daher Matsch verflüssigter Gase sehr gut als kryogenes Kältemedium für Weltraummissionen, aber auch für terrestrische Anwendungen.

Es sind bereits Verfahren entwickelt worden, mit denen Wasserstoffmatsch hergestellt werden kann, wobei zu diesen Methoden die auch in der Literatur schon verschiedenlich beschriebene Gefrier-Tau-Technik und die Auger-Methode gehören.

Bei der Gefrier-Tau-Technik wird flüssiger Wasserstoff, welcher auf Tripelpunkt-Niveau gekühlt wird, durch das Erzeugen eines Vakuums verdampft, wobei sich an der Oberfläche des flüssigen Wasserstoffes Wasserstoffkristalle bilden. Der Vakuumdruck wird auf Werte knapp oberhalb und knapp unterhalb des Tripelpunkt-Druckes zyklisch geändert, wobei sich bei einem Druck unterhalb des Tripelpunkt-Druckes eine lose Matrix von Wasserstoffkristallen ausbildet, bei einem Druck leicht oberhalb des Tripelpunkt-Druckes kondensiert Wasserstoff an den Kristallen und die festen Teilchen sinken in die Flüssigkeit. Ein gewisser Vorteil dieser Methode liegt in der relativen Einfachheit der erforderlichen technischen Ausrüstung. Da bei dieser Methode jedoch die Matschproduktion bei Unterdruck stattfindet, besteht ein gewisses Sicherheitsrisiko, weil ein unbeabsichtigtes Ansaugen von Luft und somit das Entstehen eines explosiven Wasserstoff-Sauerstoff-Gemisches nicht auszuschließen sind. Auch ist die Produktionsmenge begrenzt, etwa durch den Kühlungsprozess des flüssigen Wasserstoffes, welcher entweder durch das Verdampfen einer vorgegebenen Menge an flüssigem Wasserstoff durch indirekte Kühlung mittels Einblasen von kaltem Helium oder eines Gasgemisches Helium-Neon durchgeführt wird. Die erforderlichen großen Mengen von mindestens einigen Tonnen pro Tag können mit wirtschaftlich vertretbarem Aufwand nach dieser Methode bislang nicht erzeugt werden. Zur Verbesserung der Qualität des Wasserstoffmatsches ist es ferner erforderlich, dass dieser ein bis zwei Tage altern kann.

Bei der zweiten erwähnten Methode zur Herstellung von Wasserstoffmatsch, der Auger-Methode, wird ein in flüssigem Wasserstoff befindlicher Hohlzylinder mit Heliumgas auf eine Temperatur unterhalb des Gefrierpunktes von Wasserstoff gekühlt. Die Ausführung ist so getroffen, dass sich an der Innenwand des Zylinders fester Wasserstoff bilden kann, der mittels einer in Drehung versetzten Schnecke ständig abgekratzt wird. lm unteren Teil der Vorrichtung vermischen sich die derart entstandenen Wasserstoffkristalle mit dem flüssigen Wasserstoff zu Matsch.

Dieses Verfahren hat zwar gegenüber der Gefrier-Tau-Methode den Vorteil, dass das dort bestehende Sicherheitsrisiko hier nicht gegeben ist, da nicht mit Unterdruck operiert werden muss, bislang konnte diese Methode jedoch nur zur Herstellung von Labormengen herangezogen werden. Eine nach dieser Methode arbeitende und zur industriellen Herstellung von Wasserstoffmatsch geeignete Vorrichtung wäre aufgrund des erforderlichen mechanischen Aufwandes und der damit verbundenen Kosten wohl kaum realisierbar. Auch der nach dieser Methode hergestellte Wasserstoffmatsch muss ferner auf die Dauer von ein bis zwei Tagen einem Alterungsprozess unterzogen werden.

Ein Verfahren der eingangs genannten Art ist aus der EP-A-0 641 981 bekannt. Hier wird vorgeschlagen, Wasserstoffmatsch nach einem "Sprüh-Gefrier-Verfahren" in einem Wasserstoffmatsch-Generator zu erzeugen, welcher ein Kryostatbehältnis umfasst, in dem über eine Pumpe Vakuum erzeugt wird. In dieses Vakuum wird über eine Sprüheinrichtung flüssiger Wasserstoff eingebracht. Durch das Versprühen wird den Teilchen Wärme entzogen, sodass diese sofort verdampfen und sich ein Nebel bildet, der zumindest zum Teil ausfriert bzw. auskristallisiert. Die Produktionsrate des Wasserstoffmatsches ist unter anderem auch stark vom Aufrechterhalten des Unterdruckes abhängig. Die Qualität der sich bildenden Kristalle dürfte ferner stark unterschiedlich sein, insbesondere kann die Bildung von großen Kristallen nicht verhindert werden. Es ist daher auch vorgesehen, über rotierbare Messer oder dergleichen im entstehenden Matsch ein Zerteilen von zu großen Teilchen durchzuführen.

Die Erfindung hat sich nun die Aufgabe gestellt, ein Verfahren zur Herstellung von Matsch aus verflüssigten Gasen, insbesondere zur Herstellung von Wasserstoffmatsch, zu entwickeln, bei welchem die Anwendung von Unterdruck vermieden werden kann und mit welchem auch größere Matschmengen produziert werden können. Darüber hinaus soll es möglich sein, die Qualität des entstehenden Matsches zu verbessern, sodass beispielsweise der Zeitaufwand zur Alterung des Matches reduziert werden kann und die Fließqualität des entstehenden Matsches in Leitungen, Ventilen etc. verbessert ist. Aufgabe der Erfindung ist ferner, eine für die Anwendung dieses Verfahrens geeignete, betriebsichere und eine Herstellung von Matsch in einem industriellen Maßstab ermöglichende Vorrichtung zu entwickeln, mit der die genannten Ziele mit weitgehend geringem mechanischen Aufwand ebenfalls erreichbar sind.

Gelöst wird die gestellte Aufgabe erfindungsgemäß dadurch, dass die Flüssigkeitspartikeln unter Druck in eine Gasatmosphäre, deren Druck zumindest auf den Wert des umgebenden Luftdruckes eingestellt wird und die eine Temperatur unterhalb des Gefrierpunktes der Flüssigkeitspartikel aufweist, entlassen werden bzw. eintreten, sodass Flüssigkeitspartikel unmittelbar zu festen Kristallen gefrieren bzw. auskristallisieren.

Das erfindungsgemäße Verfahren gewährleistet daher ein Gefrieren bzw. Auskristallisieren der Partikel in einer relativ kurzen Zeitspanne. Somit ist die Form der entstehenden festen Partikel eher rund und es entsteht qualitativ guter Matsch mit zunehmender Dichte. Durch die eher runde Form ist ferner keine oder nur eine geringe Alterung notwendig, um eine hohe Dichte des Matsches und ein gutes Fließverhalten zu gewährleisten. Für die Produktion des Matsches ist ferner kein Unterdruck erforderlich, so daß das Sicherheitsrisiko für den Fall, dass Wasserstoffmatsch erzeugt wird, erheblich reduziert ist.

Gemäß einem weiteren Merkmal des erfindungsgemäßen Verfahrens werden die Flüssigkeitspartikel auf besonders einfache Weise durch Zerstäubung des verflüssigten Gases gebildet.

Die zur Zerstäubung vorgesehene Zerstäubungseinrichtung kann sehr einfach aufgebaut sein und beispielsweise zumindest eine Düse oder eine Wirbel- bzw. Mischkammer oder dergleichen umfassen.

Der Zerstäubungsvorgang lässt sich auf einfache Weise zumindest zum Teil mittels eines der Zerstäubungseinrichtung unter Druck zugeführten Gases, welches bevorzugt der gasförmigen Phase des zugeleiteten verflüssigten Gases entspricht, durchführen.

Dabei kann das der Zerstäubungseinrichtung zugeführte flüssige Gas vor und/oder während des Zerstäubungsvorganges mittels eines gasförmigen Kühlmediums gekühlt werden. Eine zusätzliche Kühlung wirkt sich auf eine Verkürzung der Zeitdauer der Auskristallisation aus.

Zusätzlich oder alternativ zur Zerstäubung mittels eines unter Druck zugeführten Gases kann das Verfahren auch so ausgelegt werden, dass die Zerstäubung zumindest zum Teil beim Austritt des verflüssigten Gases in die kalte Gasatmosphäre stattfindet.

Um in diesem Fall ein möglichst optimales Zerstäuben, quasi ein Zerplatzen des aus der Zerstäubungseinrichtung austretenden Flüssigkeitsstrahles zu gewährleisten, wird der Druck in der kalten Gasatmosphäre kleiner eingestellt, als der dem Austrittsquerschnitt der Zerstäubungseinrichtung entsprechende kritische Druck.

Um das Sicherheitsrisiko möglichst gering zu halten, wird ferner der Druck in der kalten Gasatmosphäre, wo die Auskristallisation stattfindet, so eingestellt, dass er zumindest dem umgebenden Luftdruck entspricht, insbesondere einen Wert knapp oberhalb des umgebenden Luftdrucks besitzt.

Von besonderem Vorteil beim erfindungsgemäßen Verfahren ist, dass der entstehende Matsch während der Produktion neuen Matsches zumindest im Wesentlichen kontinuierlich abgeleitet werden kann. Dabei ist es günstig, wenn das Ableiten des Matsches über die ständige Messung der Dichte desselben geregelt wird, was eine gleich bleibende Qualität des abgeleiteten Matsches sicherstellt.

Das erfindungsgemäße Verfahren eignet sich besonders gut zur Herstellung von Wasserstoffmatsch, der zunehmende Bedeutung als kryogener Treibstoff besitzt.

Als der Zerstäubungseinrichtung zugeleitetes Kühlmedium eignet sich in diesem Fall Heliumgas.

Als kalte Gasatmosphäre, wo die Flüssigkeitspartikel gefrieren bzw. auskristallisieren, wird vorteilhafterweise eine Helium-Gasatmosphäre, die mit einer entsprechend tiefen Temperatur zur Verfügung gestellt werden kann, eingesetzt.

Die gegenständliche Erfindung betrifft auch eine Vorrichtung zur Herstellung von Matsch aus verflüssigtem Gas mit einem Kryostatbehältnis, das zum Teil mit dem verflüssigten Gas befüllt ist, welches sich mit festen Kristallen zu Matsch vermengt, wobei im Kryostatbehältnis eine Zerstäubungseinrichtung zur Bildung von Flüssigkeitspartikeln aus zugeleitetem verflüssigtem Gas angeordnet ist, welche die Flüssigkeitspartikel oberhalb des im Behältnis befindlichen verflüssigten Gases in eine Gasatmosphäre entlässt.

Die erfindungsgemäße Vorrichtung ist dadurch gekennzeichnet, dass der Druck in der Gasatmosphäre zumindest dem umgebenden Luftdruck entspricht, und dass die Gasatmosphäre eine Temperatur unterhalb des Gefrierpunktes der Flüssigkeitspartikel aufweist.

Die erfindungsgemäße Vorrichtung stellt somit auf einfache Weise sicher, dass in einer relativ kurzen Zeitspanne Kristalle gebildet werden, die einen qualitativ hochwertigen Matsch gewährleisten.

Die Zerstäubungseinrichtung kann besonders einfach aufgebaut sein und insbesondere eine Düse, eine Wirbel- bzw. Mischkammer oder dergleichen umfassen.

Um die Zerstäubung des zugeleiteten verflüssigten Gases zu gewährleisten, stehen verschiedene Möglichkeiten zur Verfügung. Besonders einfach ist eine Ausführung, bei der die Zerstäubungseinrichtung eine Zuleitung zur Zuführung von unter Druck stehendem Gas besitzt, welches somit innerhalb der Zerstäubungseinrichtung eine Zerstäubung bewirkt.

Bei einer anderen Ausführungsvariante wird der Austrittsquerschnitt der Düse der Zerstäubungseinrichtung so ausgelegt, dass der sich dort einstellende Druck größer ist als der in der kalten Gasatmosphäre außerhalb der Zerstäubungseinrichtung herrschende Druck. Bei einer derartigen Auslegung kann ein Zerplatzen des Strahles beim Austritt aus der Zerstäubungseinrichtung und somit eine optimale Verwirbelung der entstehenden Flüssigkeitspartikel erfolgen.

Um die Auskristallisationszeit möglichst gering zu halten, kann die Zerstäubungseinrichtung zumindest eine weitere Zuleitung zur Zuführung eines gasförmigen Kühlmediums aufweisen. Bei einer Ausführung mit Wirbel- bzw. Mischkammer ist das Zuleiten von Kühlmedium in den Zerstäubungsraum besonders vorteilhaft.

Bei einer bevorzugten Ausführungsvariante der Zerstäubungseinrichtung wird das gasförmige Kühlmedium über Gasdüsen unter Druck zugeführt und in der Zerstäubungseinrichtung in einen Gasleitkonus geleitet, welcher im Bereich der Düse einen Ausströmspalt bildet. Der Gasstrahl dient bei dieser Ausgestaltung daher nicht nur als Kühlmedium sondern er trägt auch zu einer Verwirbelung der aus dei Düse tretenden Flüssigkeitsprtikel und der entstehenden Kristallpartikei bei.

Um eine weitgehend gleichmäßig kalte Gasatmosphäre im Kryostatbehältnis sicherzustellen, ist es von Vorteil, wenn das Behältnis zur Zuführung des die kalte Gasatmosphäre bildenden Gases eine Anzahl von Eintrittsöffnungen, die insbesondere brauseartig angeordnet sind, aufweist. Dies lässt auch eine allenfalls erwünschte Druckänderung besonders schnell zu.

Mit der erfindungsgemäßen Vorrichtung ist eine kontinuierliche Produktion von Matsch möglich, da sie mit Einrichtungen zum Ableiten des gebildeten Matsches und zum Ergänzen der Menge des verflüssigten Gases während des Herstellvorganges versehen werden kann. Um eine gute Qualität des abgeleiteten Matsches zu gewährleisten, besitzt die Vorrichtung eine Einrichtung zur Messung der Dichte des Matsches, über die das Ableiten des Matsches geregelt wird.

Die Vorrichtung ist besonders vorteilhaft dafür einsetzbar, aus verflüssigtem Wasserstoff Wasserstoffmatsch zu erzeugen.

Dabei wird das zur Zerstäubung innerhalb der Zerstäubungseinrichtung zugeleitete, unter Druck stehende Gas vorteilhafterweise ebenfalls Wasserstoff sein.

Als Kühlmedium für den zugeleiteten flüssigen Wasserstoff eignet sich in diesem Fall besonders gut Heliumgas.

Auch für die kalte Gasatmosphäre innerhalb des Kryostatbehältnisses ist Heliumgas, wegen der Sicherstellung der erforderlichen tiefen Temperaturen, besonders geeignet.

Die erfindungsgemäße Vorrichtung lässt sich ohne weiteres zu einer Produktionsanlage, mit der größere Mengen an Matsch erzeugt werden können ausbauen, in dem beispielweise eine Anzahl von Zerstäubungseinrichtungen eingesetzt wird, die beispielweise zu einem Ring oder dergleichen zusammengefügt sind.

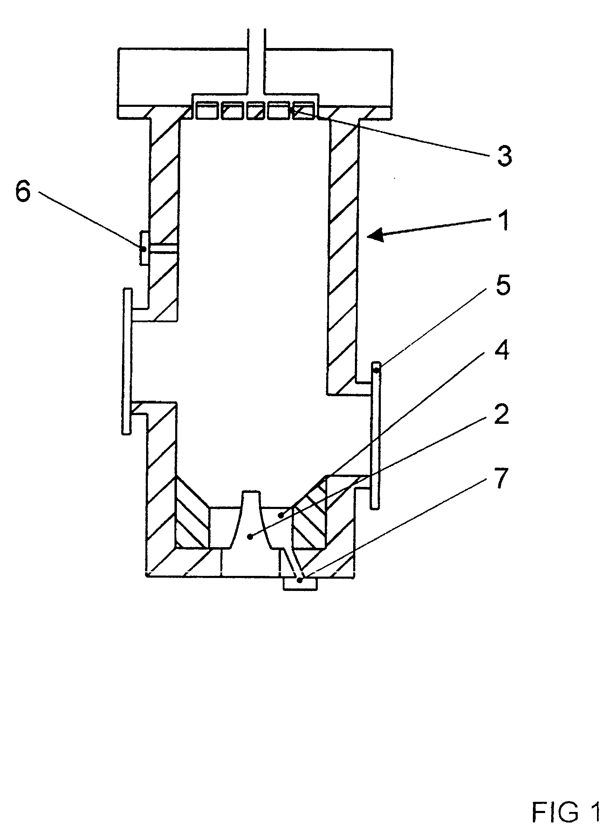

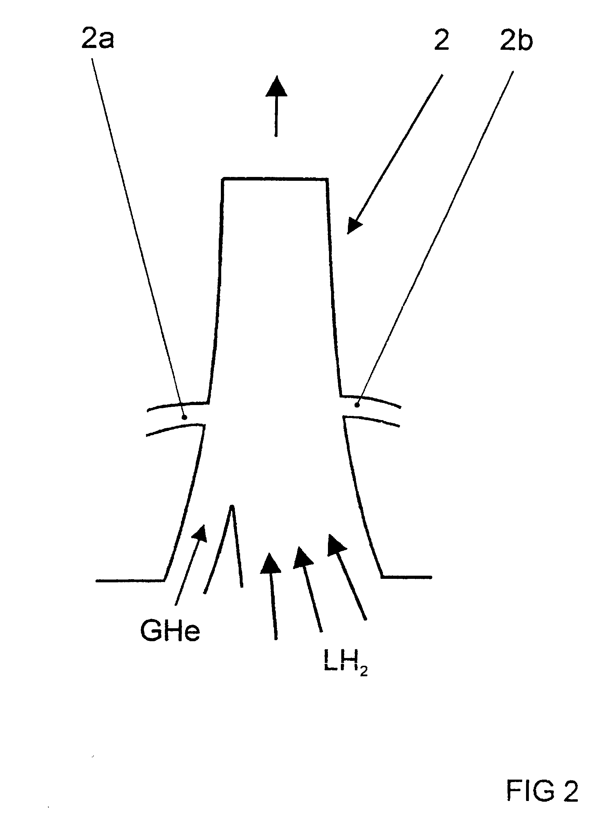

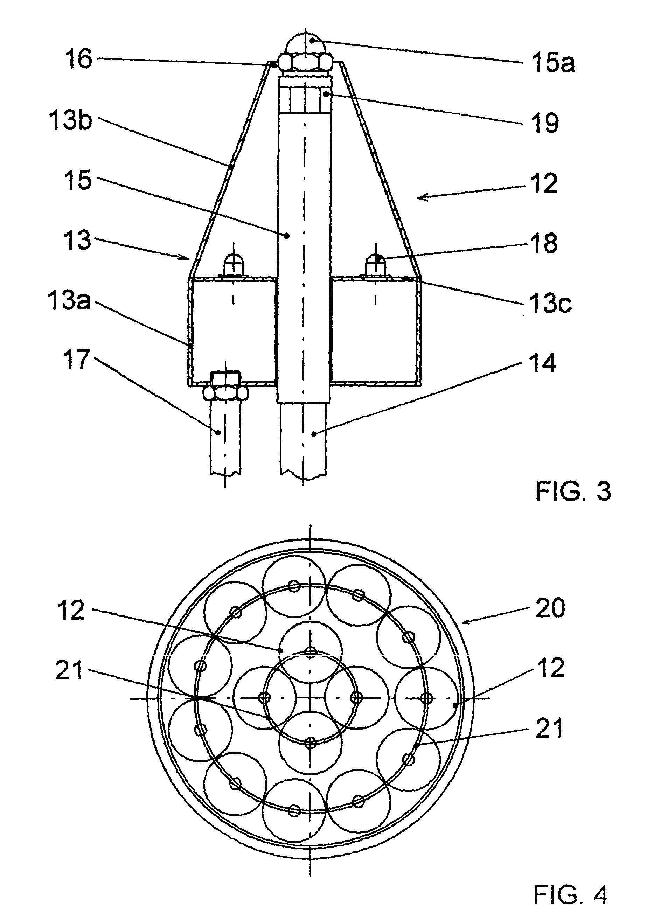

Weitere Merkmale, Vorteile und Einzelheiten der Erfindung werden nun anhand der Zeichnung, die in schematischen Darstellungen Ausführungsbeispiele der Vorrichtung darstellt, näher beschrieben. Dabei zeigt Fig. 1 einen Schnitt durch eine vereinfacht dargestellte erfindungsgemäße Vorrichtung zur Erzeugung von Matsch aus verflüssigtem Gas, wobei die Erfindung anhand der Erzeugung von Wasserstoffmatsch erläutert wird, Fig. 2 eine mögliche grundsätzliche Ausführungsform der in Fig. 1 dargestellten Zerstäubungseinrichtung, Fig.3 eine weitere, etwas konkretere Ausführungsform einer Zerstäubungseinrichtung im Längsschnitt und Fig. 4 eine Draufsicht auf eine mögliche Anordnung einer Anzahl von Zerstäubungseinrichtungen für eine mittelgroße Produktionsanlage.

Beim erfindungsgemäßen Verfahren zur Herstellung von Matsch, hier inbesondere zur Herstellung von Wasserstoffmatsch, handelt es sich um eine spezielle Spray-Methode, bei der der feste, kristalline Anteil des Matsches aus zerstäubten Partikeln des flüssigen Wasserstoffes entsteht. Zur Zerstäubung des flüssigen Wasserstoffes wird bevorzugt ein gasförmiges Medium, beispielsweise gasförmiger Wasserstoff, unter höherem Druck eingesetzt, wobei der Strom der zerstäubten Wasserstoffpartikel in eine kalte (ca. 11K) Heliumgasatmosphäre eintritt bzw. expandiert. Dort bilden sich die festen Wasserstoffkristalle, die sich auf der Oberfläche von im System befindlichen, flüssigen Wasserstoff (Tripelpunkt-Wasserstoff, 13,8K), absetzen und einsinken. Dabei entsteht Wasserstoffmatsch mit einem zunehmenden Anteil an kristallinen Partikeln und somit mit zunehmender Dichte und Qualität.

Die schematischen Darstellung in Fig. 2 veranschaulicht diverse Möglichkeiten der Austegung des Zerstäubungsvorganges unter Verwendung einer erfindungsgemäßen Zerstäubungseinrichtung 2.

Der sich hier im Querschnitt trompetenförmig verengenden Zerstäubungseinrichtung 2 wird flüssiger Wasserstoff (LH₂) zugeleitet und zu einer im Mündungsbereich angeordneten, hier gesondert nicht dargestellten Düse transportiert. Als Kühlmedium wird in der erforderlichen Menge gasförmiges Helium (GHe) zugeführt. Über eine Zuleitung 2a vor dem Mündungsbereich der Zerstäubungseinrichtung 2 wird gasförmiger Wasserstoff (GH₂) unter Druck zugeführt, wodurch der flüssige Wasserstoff zumindest zum Teil zerstäubt wird. Durch eine entsprechende Steuerung von Druck und Menge des gasförmigen Wasserstoffes kann eine weitgehende bzw. auch komplette Zerstäubung erfolgen. An Stelle von gasförmigen Wasserstoff oder zusätzlich zu diesem kann über eine weitere Zuleitung 2b auch gasförmiges Helium, welches die entstehenden Partikel gleichzeitig abkühlt, zur Zerstäubung eingesetzt werden. Die entstehenden Wasserstoffpartikel (H₂-Partikel) expandieren nach dem Austritt aus der Düse in die kalte Heliumgasatmosphäre und gefrieren dort, so daß Wasserstoffkristalle entstehen.

Die Auskristallisation benötigt nur eine kurze Zeitspanne, sodass die Form der entstehenden Partikel eher rund ist. Dies hat sehr günstige Auswirkungen auf die Qualität des entstehenden Matsches, etwa auf dessen Fließfähigkeit, und erfordert kein oder nur ein vergleichsweise kurzzeitiges Altem des entstehenden Matsches.

Der der Düse zugeleitete flüssige Wasserstoff (LH₂) kann in einem beliebigen flüssigen Zustand, der demnach zwischen seinem Zustand als NBPLH₂ (normal boiling point liquide hydrogen, 20K, 1 bar) und seinem Zustand als TPLH₂ (triple point liquid hydrogen, 13,8K, 0,07 bar) liegt, zugeführt werden.

Die Zerstäubung des flüssigen Wasserstoffes (LH₂) kann bei einer entsprechenden Auslegung der Zerstäubungseinrichtung 2 und bei entsprechender Einstellung der Druckverhältnisse zumindest zum Teil auch beim Austritt aus der Düse erfolgen, indem der Wasserstoffstrahl beim Austritt aus der Düse quasi zerplatzt. Auf diese Weise erfolgt eine optimale Verwirbelung der Wasserstoffpartikel in der Heliumgasatmosphäre. Dieses "Zerplatzen" wird dadurch erreicht, dass der Druck in der Heliumgasatmosphäre unter den dem Austrittsquerschnitt der Düse entsprechenden kritischen Druck gesenkt wird. Dabei kann durch eine entsprechende konstruktive Auslegung der Düse, insbesondere der Querschnittsfläche am Austritt, und weiterer Parameter, wie der Druckverhältnisse, der Zerstäubungsvorgang zur Gänze beim Austritt aus der Düse erfolgen.

Fig. 3 zeigt eine weitere mögliche und etwas konkreter ausgeführte Variante einer erfindungsgemäßen Zerstäubungseinrichtung 12. Die Zerstäubungseinrichtung 12 umfasst ein Gehäuse 13, welches aus einem insbesondere zylindrisch ausgeführten Basisteil 13a und einem hier kegelstumpfförmigen Gasleitteil 13b besteht, zwischen welchen sich ein Zwischenteil 13c, eine Art Platte, befindet. Die zu zerstäubende kryogene Flüssigkeit, hier flüssiger Wasserstoff, wird über eine Leitung 14 der Zerstäubungseinrichtung 12 zugeführt und im Inneren des Gehäuses 13 durch einen Düsenträger 15 zu einer Düse 15a geleitet, wo durch das überkritische Ausströmen ein Zerplatzen des Strahles stattfindet.

Die Düse 15a befindet sich im Bereich des oberen, engeren Endbereiches des kegelstumpfförmigen Gasleitteiles 13b, wobei dieser Teil 13b hier nicht geschlossen ist sondern ein Auströmspalt 16 zwischen der Düse 15a bzw. dem Düsenträger 15 und dem oberen Gehäuserand gebildet ist.

Der Basisteil 13a des Gehäuses 13 bildet um die Leitung 14 bzw. den Düsenträger 15 einen Ringkanal für Kühlgas, welches unter Druck über eine weitere Leitung 17 in den Kanal eingeleitet wird. Das Kühlgas ist hier insbesondere gasförmiges Helium (GHe), welches eine Temperatur besitzt, die geringer ist als jene der kryogenen Flüssigkeit.

Vom Ringkanal im Basisteil 13a wird das Kühlgas über eine Anzahl von Gasdüsen 18 in das Innere des kegelstumpfförmigen Gasleitteiles 13b gepresst und strömt dort zum Ausströmspalt 16, wo es sich als Kühlmantel um den aus der Düse 15a austretenden Flüssigkeitspartikelstrahl legt. Dabei trägt der Gasstrahl auch zu einer zusätzlichen Verwirbelung der Flüssigkeitspartikel bei.

Die Düse 15a kann mit einer Drallbohrung, die ebenfalls zu einer Verwirbelung des Flüssigkeitsstrahls beiträgt, versehen werden. Zusätzlich kann im Bereich knapp vor der Austrittsöffnung der Düse 15a durch eine Heizeinrichtung 19, die je nach Bedarf einschaltbar ist, sichergestellt werden, dass die kryogene Flüssigkeit nicht einfriert.

Die Zerstäubung des Wasserstoffes kann auch in einer Wirbel- bzw. Mischkammer erfolgen, wo Gas zum Zerstäuben und auch ein Kühlmedium (Heliumgas) einströmen. Dabei werden hier die Partikel mit dem Kühlmedium vermischt und treten bereits mit einer Temperatur, die nahe dem Gefrierpunkt liegt, aus der Zerstäubungseinrichtung aus.

Die eine schnelle Kristallisation der Wasserstoffpartikel bewirkende Kälte wird nun einerseits von der beim Austreten stattfindenden Expansion und andererseits durch die Temperatur der Heliumgasatmosphäre, in welche die zerstäubten Wasserstoffpartikel eintreten, gewährleistet. Wie erwähnt ist es in diesem Zusammenhang günstig, wenn in die Zerstäubungseinrichtung bzw. die Mischkammer bereits kaltes Heliumgas eingeleitet wird.

Die sich in der Heliumgasatmosphäre bildenden Wasserstoffkristalle sinken auf die Oberfläche von flüssigem Wasserstoff (TPLH₂, 13,8K, ca. 0,07 bar), vermengen sich mit dem flüssigen Wasserstoff und werden mit diesem gemeinsam zu Matsch mit zunehmender Qualität. Ein gelegentliches mechanisches Durchmischen des Matsches kann zu einer Verbesserung der Fließqualität desselben beitragen.

Das Durchmischen bzw. Mixen des produzierten Matsch verhindert auch ein unbeabsichtigtes Festwerden desselben. Alternativ zum Durchmischen können auch ein Heliumgasstrom, über Gasdüsen in den Matsch eingeleitet, oder eine Heizeinrichtung gegen ein Festwerden eingesetzt werden.

Fig. 1 zeigt nun schematisch eine grundsätzliche Ausführungsvariante einer gemäß dem erfindungsgemäßen Verfahren arbeitenden Vorrichtung. Die Vorrichtung umfasst ein Kryostatgefäß 1, dessen Wandungen entsprechend isoliert sind (Vakuumisolation und Superisolation durch gesonderten LN₂ Strahlungsschutz). Im oberen Bereich des Gefäßes 1 ist durch den Deckel die Zuleitung für das gasförmige Helium, welches mit einer Temperatur von rund 11K zugeführt wird, vorgesehen. Die Zufuhrleitung mündet dabei bevorzugt in eine Art Ringkanal, von wo über mehrere Öffnungen 3, in der Art einer Brause, ein Einströmen des Heliumgases erfolgen kann.

Im unteren Bereich des Gefäßes 1 befindet sich, wie bereits erwähnt, flüssiger Wasserstoff 4, durch den auch die Zerstäubungseinrichtung 2 geführt ist. Dies hat den Vorteil einer zusätzlichen Kühlung der Zerstäubungseinrichtung 2. Über Fenster 5 kann eine Beobachtung des Kristallisationsvorganges erfolgen.

Durch das zugeführte gasförmige Helium wird der Druck im Gefäß 1 oberhalb des flüssigen Wasserstoffes 4 bzw. des entstehenden Matches vorzugsweise knapp über 1bar gehalten. Dies vermindert das Sicherheitsrisiko, da kein Ansaugen von Luft durch etwaige Lecke möglich ist. Es kann ferner ein Überdruckventil 6 vorgesehen werden, welches bei einem bestimmten Innendruck, von beispielsweis 1,1 bar, anspricht

Wie weit die Wasserstoffpartikel bis zur Auskristallisation in das Gefäß 1 geschleudert werden, kann durch die Einstellung des Druckes des brauseartig einströmenden Heliums geregelt werden. Dabei kann zwischen dem gasförmigen Helium von oben und dem von unten kommendem GH₂/LH₂ Strom ein Gleichgewicht eingestellt werden. Im unteren Teil des Gefäßes befindet sich eine Ableiteinrichtung 7 für den entstandenen Wasserstoffmatsch (SLH₂), der ständig nachproduziert wird. Durch eine Überwachung und Messung der Dichte des entstandenen Matsches kann eine Regelung der abgeleiteten Menge erfolgen. Gleichzeitig wird auf nicht dargestellte Weise über entsprechende Zuleitungen sichergestellt, dass flüssiger Wasserstoff im Behälter 1 ergänzt wird. Es ist demnach eine kontinuierliche Produktion von Matsch möglich. Somit ist auch bei der Handhabung des Matsches ein einfaches und schnelles Kompensieren (Ersetzen) von geschmolzenem Matsch gewährleistet.

Die erfindungsgemäße Vorrichtung umfasst ferner nicht dargestellte Wärmetauscher. So wird ein Wärmetauscher vorgesehen, um das in gasförmiger Phase vorliegende Medium in die zu zerstäubende kryogene Flüssigkeit (z.B. LH2) umzuwandeln, was im Falle von Wasserstoff mit flüssigem Helium (LHe) durchgeführt wird. Ein weiterer Wärmetauscher kühlt warmes gasförmiges Medium, (z.B. GHe) zu kaltem gasförmigen Medium, insbesondere ebenfalls unter Einsatz von flüssigem Helium (LHe). Das kalte gasförmige Medium (z.B. GHe kalt) wird einerseits für die oben erwähnte Brause und andererseits als Kühlgas für die Zerstäubungseinrichtung verwendet.

Die in ihrem grundsätzlichem Aufbau beschriebene Vorrichtung kann zu einer kompletten, größere Mengen an Wasserstoffmatsch produzierenden Anlage ausgebaut werden. Dies ist beispielsweise dadurch einfach möglich, dass eine Anzahl von Zerstäubungseinrichtungen, beispielsweise ringförmig, zusammengefügt wird.

Fig. 4 zeigt in Draufsicht auf eine sehr günstige Anordnung von mehreren, hier fünfzehn, Zerstäubungseinrichtungen 12. Die Matschproduktionsanlage umfasst dabei ein die Zerstäubungseinrichtungen 12 aufnehmendes, insbesondere vakuumisoliertes und entsprechend strahlungsgeschütztes zylindrisches Gehäuse 20, in welchem in konzentrischer Anordnung zwei Ringe von Zerstäubungseinrichtungen 12 untergebracht sind. Für jeden dieser Ringe sind ringförmige Versorgungsleitungen 21 für die kryogene Flüssigkeit und das Kühlgas vorgesehen. Zum Sammeln des produzierten Matsches kann ein zentraler, hier nicht dargestellter Slush - Abfluss vorgesehen werden.

Neben der Herstellung von Wasserstoffmatsch kann nach dem erfindungsgemäßen Verfahren und mit ggf. entsprechend angepassten Vorrichtungen auch die Herstellung von Matsch aus anderen verflüssigten Gasen erfolgen, beispielsweise Stickstoff, wo der Matsch als kryogenes Kältemittel bei Langzeittransporten verwendet wird, oder auch Sauerstoff.

## Patentansprüche

1. Verfahren zur Herstellung von Matsch aus verflüssigtem Gas, welches durch Zerstäubung in ein Kryostatbehältnis eingebracht wird, wobei feste Kristalle gebildet werden, die sich mit im Kryostatbehältnis vorhandenem verflüssigten Gas zu Matsch vermengen bzw. vermengt werden, **dadurch gekennzeichnet, dass** die Flüssigkeitspartikel unter Druck in eine Gasatmosphäre, deren Druck zumindest auf den Wert des umgebenden Luftdruckes eingestellt wird und die eine Temperatur unterhalb des Gefrierpunktes der Flüssigkeitspartikel aufweist, entlassen werden bzw. eintreten, sodass Flüssigkeitspartikel unmittelbar zu festen Kristallen gefrieren bzw. auskristallisieren.

2. Verfahren nach Anspruch 1, **dadurch gekennzeichnet, dass** die Zerstäubung mittels einer Zerstäubungseinrichtung (2, 12), die insbesondere eine Düse (15a), eine Wirbel- bzw. Mischkammer oder dergleichen umfasst, erfolgt.

3. Verfahren nach Anspruch 1 oder 2, **dadurch gekennzeichnet, dass** die Zerstäubung zumindest zum Teil mittels eines der Düse (2), der Wirbel- bzw. Mischkammer oder dergleichen unter Druck zugeführten Gases erfolgt.

4. Verfahren nach Anspruch 3, **dadurch gekennzeichnet, dass** dieses Gas der gasförmigen Phase des zugeleiteten verflüssigten Gases entspricht.

5. Verfahren nach einem der Ansprüche 1 bis 4, **dadurch gekennzeichnet, dass** das der Zerstäubungseinrichtung (2, 12) zugeführte verflüssigte Gas vor und/oder während des Zerstäubungsvorganges mittels eines gasförmigen Kühlmediums gekühlt wird.

6. Verfahren nach Anspruch 1 oder 2, **dadurch gekennzeichnet, dass** die Zerstäubung zumindest zum Teil beim Austritt des verflüssigten Gases in die kalte Gasatmosphäre stattfindet.

7. Verfahren nach einem der Ansprüche 1 bis 6, **dadurch gekennzeichnet, dass** der Druck in der kalten Gasatmosphäre kleiner eingestellt ist als der dem Austrittsquerschnitt der Düse (15a) der Zerstäubungseinrichtung (2, 12) entsprechende kritische Druck.

8. Verfahren nach einem der Ansprüche 1 bis 7, **dadurch gekennzeichnet, dass** der entstehende Matsch während der Produktion neuen Matsches zumindest im Wesentlichen kontinuierlich abgeleitet wird.

9. Verfahren nach Anspruch 8, **dadurch gekennzeichnet, dass** das Ableiten des Matsches über die ständige Messung der Dichte desselben geregelt wird.

10. Verfahren nach einem der Ansprüche 1 bis 9, **dadurch gekennzeichnet, dass** das verflüssigte Gas flüssiger Wasserstoff ist.

11. Verfahren nach einem der Ansprüche 1 bis 10, **dadurch gekennzeichnet, dass** der der Zerstäubungseinrichtung zugeleitete flüssige Wasserstoff durch Zuführung von Heliumgas gekühlt wird.

12. Verfahren nach einem der Ansprüche 1 bis 11, **dadurch gekennzeichnet, dass** die kalte Gasatmosphäre eine Heliumgasatmosphäre ist.

13. Vorrichtung zur Herstellung von Matsch aus verflüssigtem Gas mit einem Kryostatbehältnis, das zum Teil mit dem verflüssigten Gas befüllt ist, welches sich mit festen Kristallen zu Matsch vermengt, wobei im Kryostatbehältnis eine Zerstäubungseinrichtung zur Bildung von Flüssigkeitspartikeln aus zugeleitetem verflüssigtem Gas angeordnet ist, welche die Flüssigkeitspartikel oberhalb des im Behältnis befindlichen verflüssigten Gases in eine Gasatmosphäre entlässt, insbesondere zur Durchführung des Verfahrens gemäß einem der Ansprüche 1 bis 12, **dadurch gekennzeichnet, dass** der Druck in der Gasatmosphäre zumindest dem umgebenden Luftdruck entspricht, und dass die Gasatmosphäre eine Temperatur unterhalb des Gefrierpunktes der Flüssigkeitspartikel aufweist.

14. Vorrichtung nach Anspruch 13, **dadurch gekennzeichnet, dass** die Zerstäubungseinrichtung (2, 12) eine Düse (15a), eine Wirbel- bzw. Mischkammer oder dergleichen umfasst.

15. Vorrichtung nach Anspruch 13 oder 14, **dadurch gekennzeichnet, dass** die Zerstäubungseinrichtung eine Zuleitung (2a) zur Zuführung von unter Druck stehendem Gas aufweist.

16. Vorrichtung nach einem der Ansprüche 13 bis 15, **dadurch gekennzeichnet, dass** durch die Größe des Austrittsquerschnittes der Düse (2) der Zerstäubungseinrichtung der Zerstäubungsdruck den Druck in der kalten Gasatmosphäre übersteigt.

17. Vorrichtung nach einem derAnsprüche 13 bis 16, **dadurch gekennzeichnet, dass** die Zerstäubungseinrichtung (2, 12) zumindest eine Zuleitung (2b, 17) zur Zuführung eines gasförmigen Kühlmediums besitzt.

18. Vorrichtung nach Anspruch 17, **dadurch gekennzeichnet, dass** die Zerstäubungseinrichtung (12) Gasdüsen (18) zum Zuführen des gasförmigen Kühlmediums unter Druck aufweist.

19. Vorrichtung nach einem der Ansprüche 13 bis 17, **dadurch gekennzeichnet, dass** die Zerstäubungseinrichtung (12) einen Gasleitkonus (13b) für das gasförmige Kühlmedium aufweist, welcher im Bereich der Düse (15a) einen Ausströmspalt (16) oder dergleichen bildet.

20. Vorrichtung nach einem der Ansprüche 13 bis 19, **dadurch gekennzeichnet, dass** die Zuführung des die kalte Gasatmosphäre bildenden Gases eine Anzahl von Eintrittsöffnungen (3), die insbesondere brauseartig angeordnet sind, aufweist.

21. Vorrichtung nach einem der Ansprüche 13 bis 20, **dadurch gekennzeichnet, dass** sie Einrichtungen zum Ableiten des gebildeten Matsches und zum Ergänzen der Menge des verflüssigten Gases während des Herstellvorganges aufweist.

22. Vorrichtung nach Anspruch 21, **dadurch gekennzeichnet, dass** sie eine Vorrichtung zur Messung der Dichte des Matsches aufweist, mit der das Ableiten des Matsches geregelt wird.

23. Vorrichtung nach einem der Ansprüche 13 bis 22, **dadurch gekennzeichnet, dass** das verflüssigte Gas flüssiger Wasserstoff ist.

24. Vorrichtung nach Anspruch 15 oder 23, **dadurch gekennzeichnet, dass** das der Zerstäubungseinrichtung zugeleitete unter Druck stehende Gas Wasserstoff ist.

25. Vorrichtung nach Anspruch 15 oder 17, **dadurch gekennzeichnet, dass** das Kühlmedium Heliumgas ist.

26. Vorrichtung nach einem der Ansprüche 13 bis 25, **dadurch gekennzeichnet, dass** die kalte Gasatmosphäre von Heliumgas gebildet wird.

27. Vorrichtung nach einem der Ansprüche 13 bis 26, **dadurch gekennzeichnet, dass** sie eine Anzahl von Zerstäubungseinrichtungen (12) aufweist, die vorzugsweise ringförmig angeordnet sind.

## Claims

1. A method of producing sludge from liquefied gas which, by being atomised, is introduced into a cryostat container, wherein there are formed solid crystals which mingle with and mixed with liquefied gas present in the cryostat container in order to form sludge, **characterised in that** the particles of liquid, under pressure, are released into and enter gas atmosphere whose pressure is set to at least the value of the ambient air pressure and which comprises a temperature which is lower than the freezing point of the particles of liquid, so that particles of liquid directly freeze, and, respectively, crystallise out, to form solid crystals.

2. A method according to claim 1, **characterised in that** atomisation is effected by an atomisation device (2, 12) which, especially, comprises a nozzle (15a), a whirling and mixing chamber of the like.

3. A method according to claim 1 or 2, **characterised in that** atomisation is at least partially effected by a gas supplied under pressure to the nozzle (2), to the whirling and mixing chamber or the like.

4. A method according to claim 3, **characterised in that** said gas corresponds to the gaseous phase of the liquefied gas supplied.

5. A method according to any one of claims 1 to 4 **characterised in that** before and/or during the atomisation process, the liquefied gas supplied to the atomisation device (2, 12) is cooled by a gaseous cooling medium.

6. A method according to claim I or 2, **characterised in that** atomisation, at least partially, takes place at the point in time when the liquefied gas enters the cold gas atmosphere.

7. A method according to any one of claims 1 to 6, **characterised in that** the pressure in the cold gas atmosphere is set so as to be lower than the critical pressure corresponding to the exit cross-section of the nozzle (15a) of the atomisation device (2, 12).

8. A method according to any one of claims 1 to 7, **characterised in that** the resulting sludge, during the production of new sludge, is at least substantially continuously withdrawn.

9. A method according to claim 8, **characterised in that** the withdrawal of the sludge is controlled via continuous measurements of the density of same.

10. A method according to any one of claims 1 to 9, **characterised in that** the liquefied gas is liquid hydrogen.

11. A method according to any one of claims 1 to 10, **characterised in that** the liquid hydrogen supplied to the atomisation device is cooled by supplying helium gas.

12. A method according to any one of claims 1 to 11, **characterised in that** the cold gas atmosphere is a helium gas atmosphere.

13. A device for producing sludge from liquefied gas, having a cryostat container which is partially filled with liquefied gas which is mixed with solid crystals to form sludge, wherein, in the cryostat container, there is arranged an atomisation device for forming particles of liquid from the liquefied gas as supplied, which atomisation device releases the particles of liquid above the liquefied gas held in the container into gas atmosphere, especially for carrying out the method according to any one of claims 1 to 12, **characterised in that** the pressure in the gas atmosphere corresponds at least to the ambient air pressure and that the temperature of the gas atmosphere is below the freezing point of the particles of liquid.

14. A device according to claim 13, **characterised in that** the atomisation device (2, 12) comprises a nozzle (15a), a whirling and mixing device or the like.

15. A device according to claim 13 or 14, **characterised in that** atomisation device comprises a supply line (2a) for supplying pressurised gas.

16. A device according to any one of claims 13 to 15, **characterised in that**, as a result of the size of the exit cross-section of the nozzle (2) of the atomisation device, the atomisation pressure exceeds the pressure in the cold gas atmosphere.

17. A device according to any one of claims 13 to 16, **characterised in that** the atomisation device (2, 12) comprises at least one supply line (2b, 17) for supplying a gaseous cooling medium.

18. A device according to claim 17, **characterised in that** the atomisation device (12) comprises gas nozzles (18) for supplying the gaseous cooling medium under pressure.

19. A device according to any one of claims 13 to 17, **characterised in that** the atomisation device (12) comprises a gas conducting cone (13b) for the gaseous cooling medium, which gas conducting cone (13b) forms a discharge gap (16) or the like in the region of the nozzle (15a).

20. A device according to any one of claims 13 to 19, **characterised in that** the supply line of the gas forming the cold gas atmosphere comprises a number of entry apertures (3) which, especially, are arranged sprinkler-like.

21. A device according to any one of claims 13 to 20, **characterised in that** it comprises devices for discharging the sludge which has formed and for supplementing the quantity of the liquefied gas during the production process.

22. A device according to claim 21, **characterised in that** it comprises a device for measuring the density of the sludge by means of which the discharge of the sludge is controlled.

23. A device according to any one of claims 13 to 22, **characterised in that** the liquefied gas is liquid hydrogen.

24. A device according to claim 15 or 23, **characterised in** the pressurised gas supplied to the atomisation device is hydrogen.

25. A device according to claim 15 or 17, **characterised in that** the cooling medium is helium gas.

26. A device according to any one of claims 13 to 25, **characterised in that** the cold gas atmosphere is formed by helium gas.

27. A device according to any one of claims 13 to 26, **characterised in that** it comprises a number of atomisation devices (12) which are preferably arranged so as to form an annulus.

## Revendications

1. Procédé de fabrication de boue à partir d'un gaz liquéfié, lequel est amené par vaporisation dans un récipient de cryostat, des cristaux solides étant formés qui se mélangent ou sont mélangés au gaz liquéfié présent dans le récipient de cryostat pour donner une boue, **caractérisé en ce que** les particules liquides sont libérées ou se produisent sous la pression dans une atmosphère gazeuse, dont la pression est réglée au moins sur la valeur de la pression d'air ambiante et qui présente une température inférieure au point de congélation des particules liquides, de sorte que les particules liquides se congèlent ou se recristallisent directement en cristaux solides.

2. Procédé selon la revendication 1, **caractérisé en ce que** la vaporisation est réalisée au moyen d'un dispositif de vaporisation (2, 12) qui comprend notamment une buse (15a), une chambre de turbulence ou de mélange ou une chambre similaire.

3. Procédé selon la revendication 1 ou 2, **caractérisé en ce que** la vaporisation s'effectue au moins en partie au moyen d'un gaz amené sous pression dans la buse (2), la chambre de turbulence ou de mélange ou une chambre similaire.

4. Procédé selon la revendication 3, **caractérisé en ce que** ce gaz correspond à la phase gazeuse du gaz liquéfié amené.

5. Procédé selon l'une des revendications 1 à 4, **caractérisé en ce que** le gaz liquéfié amené dans le dispositif de vaporisation (2, 12) est refroidi avant et/ou pendant l'opération de vaporisation au moyen d'un liquide réfrigérant sous forme gazeuse.

6. Procédé selon la revendication 1 ou 2, **caractérisé en ce que** la vaporisation a lieu au moins en partie lors de la sortie du gaz liquéfié dans l'atmosphère gazeuse froide.

7. Procédé selon l'une des revendications 1 à 6, **caractérisé en ce que** la pression dans l'atmosphère gazeuse froide est réglée pour être inférieure à la pression critique correspondant à la section de sortie de la buse (15a) du dispositif de vaporisation (2, 12).

8. Procédé selon l'une des revendications 1 à 7, **caractérisé en ce que** la boue obtenue est évacuée au moins essentiellement de manière continue pendant la production d'une nouvelle boue.

9. Procédé selon la revendication 8, **caractérisé en ce que** l'évacuation de la boue est réglée sur le mesurage constant de l'épaisseur de celle-ci.

10. Procédé selon l'une des revendications 1 à 9, **caractérisé en ce que** le gaz liquéfié est de l'hydrogène liquéfié.

11. Procédé selon l'une des revendications 1 à 10, **caractérisé en ce que** l'hydrogène liquéfié amené dans le dispositif de vaporisation est refroidi par l'apport d'hélium à l'état gazeux.

12. Procédé selon l'une des revendications 1 à 11, **caractérisé en ce que** l'atmosphère gazeuse froide est une atmosphère d'hélium à l'état gazeux.

13. Dispositif pour la production de boue à partir d'un gaz liquéfié, doté d'un récipient de cryostat rempli en partie par le gaz liquéfié qui se mélange à la boue avec des cristaux solides, un dispositif de vaporisation étant placé dans le récipient de cryostat pour former des particules liquides à partir du gaz liquéfié amené, lequel libère les particules liquides au-dessus du gaz liquéfié se trouvant dans le récipient dans une atmosphère gazeuse, notamment en mettant en oeuvre le procédé selon l'une des revendications 1 à 12, **caractérisé en ce que** la pression dans l'atmosphère gazeuse correspond au moins à la pression d'air ambiante, et **en ce que** l'atmosphère gazeuse présente une température inférieure au point de congélation des particules liquides.

14. Dispositif selon la revendication 13, **caractérisé en ce que** le dispositif de vaporisation (2, 12) comprend une buse (15a), une chambre de turbulence ou de mélange ou une chambre similaire.

15. Dispositif selon la revendication 13 ou 14, **caractérisé en ce que** le dispositif de vaporisation présente une conduite (2a) pour l'admission de gaz restant sous pression.

16. Dispositif selon l'une des revendications 13 à 15, **caractérisé en ce que**, par la taille de la section de sortie de la buse (2) du dispositif de vaporisation, la pression de vaporisation dépasse la pression dans l'atmosphère gazeuse froide.

17. Dispositif selon l'une des revendications 13 à 16, **caractérisé en ce que** le dispositif de vaporisation (2, 12) possède au moins une conduite (2b, 17) pour l'admission d'un liquide réfrigérant sous forme gazeuse.

18. Dispositif selon la revendication 17, **caractérisé en ce que** le dispositif de vaporisation (12) présente des buses à gaz (18) pour l'admission du liquide réfrigérant gazeux sous pression.

19. Dispositif selon l'une des revendications 13 à 17, **caractérisé en ce que** le dispositif de vaporisation (12) présente un cône d'admission de gaz (13b) pour le liquide réfrigérant gazeux, lequel forme dans la partie de la buse (15a) un écartement d'évacuation (16) ou un élément analogue.

20. Dispositif selon l'une des revendications 13 à 19, **caractérisé en ce que** l'amenée du gaz formant l'atmosphère gazeuse froide présente de nombreuses ouvertures d'entrée (3) agencées notamment comme dans une pomme d'arrosoir.

21. Dispositif selon l'une des revendications 13 à 20, **caractérisé en ce qu'**il présente des installations pour évacuer la boue formée et pour compléter la quantité de gaz liquéfié pendant l'opération de fabrication.

22. Dispositif selon la revendication 21, **caractérisé en ce qu'**il présente un dispositif pour mesurer l'épaisseur de la boue avec laquelle est réglée l'évacuation de la boue.

23. Dispositif selon l'une des revendications 13 à 22, **caractérisé en ce que** le gaz liquéfié est de l'hydrogène liquéfié.

24. Dispositif selon la revendication 15 ou 23, **caractérisé en ce que** le gaz sous pression amené dans le dispositif de vaporisation est de l'hydrogène.

25. Dispositif selon la revendication 15 ou 17, **caractérisé en ce que** le liquide réfrigérant est de l'hélium à l'état gazeux.

26. Dispositif selon l'une des revendications 13 à 25, **caractérisé en ce que** l'atmosphère gazeuse froide est formée d'hélium à l'état gazeux.

27. Dispositif selon l'une des revendications 13 à 26, **caractérisé en ce qu'**il présente de nombreux dispositifs de vaporisation (12) placés de préférence en forme d'anneau.
